# EUROPEAN PATENT SPECIFICATION

(11) **EP 4 307 895 B1**
(45) Date of publication and mention of the grant of the patent: **03.12.2025**
(21) Application number: 22716233.6
(22) Date of filing: 18.03.2022
(51) Int. Cl.: A01N 43/40, A01N 25/00, A01N 25/04, A01N 25/30, A01P 3/00, A01P 5/00

(54) **CYCLOBUTRIFLURAM SUSPENSION CONCENTRATE COMPOSITION**
CYCLOBUTRIFLURAM-SUSPENSIONSKONZENTRAT-ZUSAMMENSETZUNG
COMPOSITION DE CONCENTRÉ DE SUSPENSION DE CYCLOBUTRIFLURAM

(30) Priority: 19.03.2021 EP 21163835
(43) Date of publication of application: 24.01.2024
(73) Proprietor: Syngenta Crop Protection AG, 4058 Basel (CH)
(72) Inventor: SCHNEIDER, Sandra, 4333 Münchwilen (CH); KIENTZ, Heloise, 4333 Münchwilen (CH); BREMONT, Anne-Laure, 4333 Münchwilen (CH); BIRCHER, Rene Rolf, 4333 Münchwilen (CH)
(74) Representative: HGF
(86) International application number: PCT/EP2022/057156
(87) International publication number: WO 2022/195078

(56) References cited:
- EP-A1- 3 292 759
- WO-A1-2013/143811
- WO-A1-2015/003951
- WO-A2-2009/123346
- ANON.: "Syngenta announces TYMIRIUM technology brand", 7 May 2020 (2020-05-07), pages 1 - 2, XP055828382, Retrieved from the Internet <URL:https://www.syngenta.com/en/company/media/syngenta-news/year/2020/syngenta-announces-tymirium-tm-technology-brand> [retrieved on 20210728]
- NORIHARU UMETSU ET AL: "Development of novel pesticides in the 21st century", JOURNAL OF PESTICIDE SCIENCE, vol. 45, no. 2, 20 May 2020 (2020-05-20), TOKYO, JAPAN, pages 54 - 74, XP055705077, ISSN: 1348-589X, DOI: 10.1584/jpestics.D20-201
- ANON.: "Technical bulletin: Tersperse 2500 Dispersant", 1 January 2016 (2016-01-01), pages 1 - 2, XP055828610, Retrieved from the Internet <URL:https://www.palmerholland.com/getmedia/efd84cc2-26c5-4ce1-bd6d-d324869f1835/MITM11015_1> [retrieved on 20210728]
- ANON.: "Toximul 8315", 1 June 2015 (2015-06-01), pages 1 - 2, XP055828546, Retrieved from the Internet <URL:https://www.stepan.com/content/dam/stepan-dot-com/webdam/website-product-documents/product-bulletins/surfactants/TOXIMUL8315.pdf> [retrieved on 20210728]

## Description

### Technical field

The present invention relates to a new aqueous cyclobutrifluram suspension concentrate composition. Such compositions find use in agriculture to control pests harmful to commercial crops.

### Background

Cyclobutrifluram is a pesticidal active ingredient with activity against a wide variety of nematodes and fungis. The molecule cyclobutrifluram has been disclosed in WO2013/143811 and WO2015/003951 (both Syngenta). Cyclobutrifluram provides long-lasting protection against a broad spectrum of nematode pests and diseases across all major crops and geographies. Nematodes not only attack crops but also open a path to further fungal infection. Cyclobutrifluram offers excellent control of both nematodes and soil-borne diseases, especially *Fusarium species.* By protecting the root mass, cyclobutrifluram plays a critical part in enabling no-tillage and conservation-tillage practices.

Seed treatments are the biological, physical and chemical agents and techniques applied to seeds to provide protection and improve the establishment of healthy crops. Applying the products directly to the seed is substantially more efficient and effective than broadcast crop protection methods. By applying only very small quantities of plant protection products directly to the seed itself, prior to the sowing, seed treatments protect the seed during germination and protect the plant itself during growth. With much lower chemical intensity per hectare, it is more environmentally friendly than spraying crops in the field. However, to treat seeds with the crop protection active ingredients, very high strength concentrated formulations are needed. The environmentally most friendly type of formulations for seed treatments are water-based formulations such as suspension concentrate formulations. However, such suspension concentrates typically suffer from drawbacks such stability issues, e.g. sedimentation of the active ingredient, milling problems of the active ingredients during manufacture, long term cold and hot storage stability etc.

It is the purpose of the invention to provide a stable and highly concentrated suspension concentrate (herein after also referred to as "SC") formulation of the newly developed pesticidal active ingredient cyclobutrifluram. In particular, the SC formulation of the present invention provided improved the quality of treated seeds.

### Description of the invention

Cyclobutrifluram is being developed as a nematicide and has shown also good activity against soil-borne diseases. One of the best and environmentally most friendly ways of administering a pesticide is via seed treatment. It is the purpose of this invention to provide an aqueous suspension concentrate with a high loading of cyclobutrifluram which may be employed in seed treatment.

"Suspension concentrate" is also known as flowable concentration, and it is a stable suspension of active ingredient(s) with water as the fluid, intended for dilution with water before use. A "flowable suspension" (herein after also referred to as "FS") is a table flowable suspension for application to the seed, either directly or after dilution. For avoidance of doubt, reference to "suspension concentrate" in the present application includes "flowable suspension".

In a first aspect, as embodiment 1, the invention provides an aqueous suspension concentrate composition comprising
(i) cyclobutrifluram;
(ii) 25 to 125 gram / liter of a vegetable oil; and
(iii) 25 to 125 gram / liter of an ethoxylated fatty alcohol being oleyl alcohol polyglycol ether.

Preferably, the invention provides an aqueous suspension concentrate composition comprising
(i) cyclobutrifluram;
(ii) 50 to 100 gram / liter of a vegetable oil; and
(iii) 50 to 100 gram / liter of an ethoxylated fatty alcohol being oleyl alcohol polyglycol ether.

More preferably, the aqueous suspension concentrate composition comprises 75 to 125 gram / liter of a vegetable oil. Most preferably, the aqueous suspension concentrate composition comprises 85 to 115 gram / liter of a vegetable oil. The vegetable oil may be selected from Castor oil, Coconut oil, Corn oil, Cotton seed oil, Grape seed oil, Hazelnut oil, Linseed oil, Olive oil, Palm kernel oil, Palm oil, peanut oil, Rape seed oil, Rice bran oil, Safflower oil, Sesame oil, Soybean oil, Sunflower seed oil, and Walnut oil. Preferrably, the vegetable oil may be selected from rape seed oil, sunflower oil, castor oil, and soybean oil.

More preferably, the aqueous suspension concentrate composition comprises 60 to 110 gram / liter of an ethoxylated fatty alcohol being oleyl alcohol polyglycol ether. Most preferably, the aqueous suspension concentrate composition comprises 75 to 100 gram / liter of an ethoxylated fatty alcohol being oleyl alcohol polyglycol ether. Suitable ethoxylated fatty alcohol as used herein are known to a person skilled in the art, for example under the brand names BRIJ^{®}, GENAPOL^{®},

As embodiment 2, the invention provides an aqueous suspension concentrate composition according to embodiment 1 wherein the aqueous suspension concentrate composition comprises 100 to 300 gram / liter of cyclobutrifluram. Preferably, the aqueous suspension concentrate composition comprises 150 to 250 gram / liter of cyclobutrifluram. More preferably, the aqueous suspension concentrate composition comprises 180 to 220 gram / liter of cyclobutrifluram.

As embodiment 3, the invention provides an aqueous suspension concentrate composition according to embodiment 1 or 2, wherein the aqueous suspension concentrate composition comprises more vegetable oil than ethoxylated fatty alcohol being oleyl alcohol polyglycol ether. More preferably, the aqueous suspension concentrate composition comprises at least 10% more vegetable oil than ethoxylated fatty alcohol being oleyl alcohol polyglycol ether (measured in gram / liter).

As embodiment 4, the invention provides an aqueous suspension concentrate composition according to one of embodiments 1 to 3, comprising:
(i) cyclobutrifluram;
(ii) 75 to 125 gram / liter of a vegetable oil; and
(iii) 60 to 110 gram / liter of an ethoxylated fatty alcohol being oleyl alcohol polyglycol ether.

As embodiment 5, the invention provides an aqueious suspension concentrate composition according to one of embodiments 1 to 4, wherein the vegetable oil is soybean oil.

As embodiment 6, there is provided an aqueous suspension concentrate composition according to any one of embodiments 1 to 5, wherein the ethoxylated fatty alcohol is an oleyl alcohol polyglycol ether. Preferably, the ethoxylated fatty alcohol is an oleyl alcohol polyglycol ether with 5-20 ethylene oxide.

As embodiment 7, there is provided the aqueous suspension concentrate composition according to any one of embodiments 1 to 4, further comprising (iv) 20 to 120 gram / liter of a pigment. Preferably, the aqueous suspension concentrate composition comprises 40 to 100 gram / liter of a pigment. More preferably, the aqueous suspension concentrate composition comprises 40 to 80 gram / liter of a pigment.

The term "pigment" as used herein is a dye suitable to color the seeds when carrying out seed treatment.

This can be really important as it signifies to the operator which seeds have already been treated and thus avoid unnecessary exposure to the active ingredient. Furthermore, a pigment also serves to discourage birds from consuming treated seed. Typical pigments to be used in the current suspension concentrate composition are salts of monoazo dyes, for example calcium salts of monoazo dyes. Preferably, the pigment used in the present invention is red. An example is Pigment Red 48 (4-[2-(5-Chloro-4-methyl-2-sulfophenyl)diazenyl]-3-hydroxy-2-naphthalenecarboxylic acid). Further examples of suitable pigments and dyes include C.I.Pigment Red 48, (2-Naphthalenecarboxylic acid, 4-[(5-chloro-4-methyl-2-sulfophenyl)azo]-3-hydroxy-, calcium salt, di-sodium salt, magnesium salt, strontium salt), C.I.Pigment red 53 (Benzenesulfonic acid, 5-chloro-2-[2-(2-hydroxy-1-naphthalenyl)diazenyl]-4-methyl-, barium salt), C.I.Pigment red 57 (calcium;4-[(4-methyl-2-sulfophenyl)diazenyl]-3-oxidonaphthalene-2-carboxylate), C.I.Pigment red 112 (3-Hydroxy-N-(2-methylphenyl)-4-[(2,4,5-trichlorophenyl)diazenyl]naphthalene-2-carboxamide), C.I.Pigment red 254 (1,4-bis(4-chlorophenyl)-2,5-dihydropyrrolo[3,4-c]pyrrole-3,6-dione), and/or Acid red 18 / Food red 7 (trisodium;7-hydroxy-8-[(4-sulfonatonaphthalen-1-yl)diazenyl]naphthalene-1,3-disulfonate).

As embodiment 8, the invention provides an aqueious suspension concentrate composition according to any one of embodiments 1 to 7 comprising
(i) 150 to 250 gram / liter cyclobutrifluram;
(ii) 25 to 125 gram / liter of a vegetable oil;
(iii) 25 to 125 gram / liter of an oleyl alcohol polyglycol ether; and
(iv) 40 to 100 gram / liter of a pigment.

As embodiment 9, the invention provides an aqueious suspension concentrate composition according to any one of embodiments 1 to 8 comprising
(i) 150 to 250 gram / liter cyclobutrifluram;
(ii) 75 to 125 gram / liter of soybean oil;
(iii) 60 to 110 gram / liter of an oleyl alcohol polyglycol ether; and
(iv) 40 to 100 gram / liter of a pigment.

As embodiment 10, the invention provides an aqueous suspension concentrate composition according to any one of embodiments 1 to 9 further comprising
(v) 1 to 30 gram / liter of a sulfosuccinate wetting agent;
(vi) 5 to 50 gram / liter of a butyl polyalkylene oxide block copolymer; and
(vii) 2.5 to 35 gram / liter of a sodium lignosulfonate.

The person skilled in the art is aware of sulfosuccinate wetting agents as defined in embodiment 10. An example of a sulfosuccinate wetting agent is Sodium-dioctyl-sulfosuccinate. Examples of such wetting agents are commercialized under the tradenames AEROSOL^{®}, AGENT^{®}, AGNIQUE^{®}, CELANOL^{®}, CELESTOL^{®}, DISPONIL^{®}, EMULSOGEN^{®}, ENZU RPON^{®}, GEROPON^{®}, LANKROPOL^{®}, LIOVAC^{®}, MONAWET^{®}, MULTIWET^{®}, NEKAL^{®}, NEWKALG EN^{®}, OCTOWET^{®}, REWOPOL^{®}, STEPWET^{®}, TRITON^{®}, and UMECTANTE^{®}.

Butyl polyalkylene oxide block copolymer as used herein are non-ionic surfactants known to a person skilled in the art. They are sold under commercial brand names including AGUARD^{®}, AGITAN^{®}, AGNIQUE^{®}, ANTAROX^{®}, ATLAS^{®}, BREOX^{®}, CONTEX^{®}, EMKAROX^{®}, EMULGEN^{®}, EMULSOGEN^{®}, EMULSON^{®}, MACOL^{®}, NEWPOL^{®}, PLURACOL^{®}, POLYGLYKOL^{®}, PPG-BUTETH^{®}, SURFONIC^{®}, SYNALOX^{®}, SYNERGEN^{®}, TERGITOL^{®}, TERMUL^{®}, TOXIMUL^{®}, UCON^{®}, ULTRARIC^{®}, and WITCONOL^{®}.

Suitable sodium lignosulfonates as used herein are known to a person skilled in the art, for example under the brand names BANIREX^{®}, BORRESPERSE^{®}, DIWATEX^{®}, GREENSPERSE^{®}, KRAFTSPERSE^{®}, LIGNOSITE^{®}, MARACARB^{®}, MARASPERSE^{®}, NORLIG^{®}, ORZANS^{®}, POLYFON^{®}, REAX^{®}, REVEAL^{®}, SANEKISP^{®}, TENSIOFIX^{®}, ULTRAZINE^{®}, URZANS^{®}, VANIREX^{®}, VANISPERSE^{®}, VIXIL^{®}, and VIXILEX^{®}.

In a preferred embodiment, there is provided an aqueous suspension concentrate composition according to embodiment 10, wherein the butyl polyalkylene oxide block copolymer is a butyl alcohol polyoxyethylene-polyoxypropylene block copolymer, also known as copolymer butanol PO (propylene oxide)/EO (ethylene oxide).

As embodiment 11, there is provided the aqueous suspension concentrate composition according to any one of embodiments 1 to 10, further comprising (viii) 1 to 55 gram / liter of an acrylic graft copolymer. Typical acrylic graft copolymers as used herein are known to a person skilled in the art, for example the non-ionic surfactants sold under the commercial brand names ATLOX^{®}, EMULSON^{®}, HYPERMER^{®}, STEP-FLOW^{®}, and TERSPERSE^{®}.

In a preferred embodiment, there is provided the aqueous suspension concentrate composition according to embodiment 11, wherein the acrylic graft copolymer comprises a methyacrylic acid backbone.

In a second aspect, as embodiment 12, there is provided a method of reducing or preventing nematicidal or fungicidal damage in a plant comprising applying a composition according to any one of embodiments 1 to 11 to the seed of a plant.

As embodiment 13, there is provided the method according to embodiment 12, wherein the plant is selected from barley, brassica head and stem vegetables, bean, carrot, chickpea, corn, cotton, cowpea, curcurbits, dry beans, field peas, garden beans, garlic, lentils, lettuce, millet, oat, onion, peanut, peas, potato, rice, rye, sorghum, soybean, sugarbeet, sunflower, triticale, canola, oil seed rape seed, sweet corn, and wheat. Preferrably, the plant is selected from barley, wheat, peanut and rice.

The method according to embodiments 12 or 13, wherein the composition according to any one of embodiments 1 to 11 comprises a further pesticidally active ingredient.

The term "compositions of the present invention", "compositions of the current inventions" or "inventive compositions" as used herein mean compositions according to any one of embodiments 1 to 11.

The following advantages of the aqueous suspension concentrate composition of the present invention have been surprisingly found:
(a) Prolonged storage stability, i.e. no occurrence of physical changes in the composition such as cloudiness, precipitation or flake building even over prolonged periods;
(b) full suspension of the concentrate when diluted in water;
(c) excellent physical stability of the active ingredient cyclobutrifluram;
(d) reduced dust-off from seeds, thus improving safety when handling the treated seeds;
(e) excellent seed flow of treated seeds, i.e. improved ease of application.

In a further aspect, the current invention provides a method for controlling a pest comprising diluting a composition according to any one of embodiments 1 to 11 with a suitable liquid carrier, in particular an aqueous liquid carrier, such as water or liquid fertilizer, and then applying the dilute composition to the plant propagation material, plant or locus thereof. In another embodiment, the dilute composition is applied by in furrow or T-band type application. The composition of the present invention may also be combined in a continuous flow apparatus with water in spray application equipment, such that no holding tank is required for the diluted product.

Other active ingredients such as herbicides, plant growth regulators, algicides, fungicides, bactericides, viricides, insecticides, acaricides, nematicides or molluscicides may be present in the suspension concentrate compositions of the present invention or may be added as a tank-mix partner to the dilute spray compositions prepared therefrom.

In addition, the soluble concentrate compositions of the invention may further comprise other additives. Such additives include safeners, thickeners, flow enhancers, wetting agents, antifoaming agents, biocides, buffers, chelating agents, lubricants, fillers, drift control agents, deposition enhancers, evaporation retardants, frost protecting agents, insect attracting odor agents, UV protecting agents, fragrances, and the like. These additives are known to a person skilled in the art.

Examples of a suitable antifreeze include 1,2-Propylenglykol, and/or propan-1,2,3-triol. Examples of an anti-foam agent include Polydimethylsiloxane antifoam compounds and/or emulsion. Examples of a thickening agent include mineral stabilizers like clays such as montmorillonites and attapulgites, and natural polymers such as Xantham gums. Examples of a suitable preservative include 1,2-benzisothiazol-3-one, 5-Chloro-2-methyl-4-isothiazolin-3-one, 2-methyl-4-isothiazolin-3-one, and/or 2-bromo-2-nitropropan-1,3-diol.

The following examples illustrate further the invention but are not intended to limit its scope.

### Experimental Examples

### Methodology

### Dust-off

These tests are carried out using well-known test method "HEUBACH dust-off test".

In such test, treated seeds are mechanically stressed inside a rotating drum. A vacuum pump creates an air flow through the rotating drum, the connected glass cylinder and the attached filter unit. By the air flow, abraded dust particles are transported out of the rotating drum through the glass cylinder and subsequently through the filter unit. Coarse non-floating particles are separated and collected in the glass cylinder while floating dust particles are deposited onto a filter. The amount of floating dust collected on the filter is determined gravimetrically.

ESTA (the European Seed Treatment Assurance Industry Scheme) assures that treated seeds that exceed the industry dust reference values or any legal requirements, if lower, shall not be put on the market. The dust reference values that were developed by Euroseeds are 4g dust/100kg for cereal seeds. In practice, a much lower dust-off value is often desirable, because the lower the dust-off value, the less the SC formulation tends to come off the seeds, i.e. less SC formulation is lost/wasted.

### Seed flow

The method has been developed to measure seed flow. A standardized funnel is used to assess the seed flow in comparison to untreated seed (= 100%). The funnel is equipped with a pneumatically operated slide gate. Freshly treated seeds are dried for 24 hours, and then passed through the funnel. The flow of the dry seeds is then measured. If seed flow for a treated seed is 80%, this means the speed in which the treated seeds pass through the funnel was 80% that of the speed of untreated seeds. Generally speaking, a high seed flow is desirable, because it means the treated seeds are likely less sticky, and likely would pass through different machineries during the production, packaging and sewing processes more quickly, thus improving efficiency and reducing seed loss.

### Storage

Samples of different compositions in accordance with the present invention and comparative compositions are stored at different temperatures and over different time periods. The tests below are performed before and after storage to determine shelf life and stability of the compositions.

### Viscosity

Viscosity was measured directly in vials containing composition with Brookfield@ Viscometer. Measurement was performed with Spindle 63, at 30rpm, value was taken after 1 minute.

Viscosity has been measured on newly prepared samples of composition at room temperature and / or after accelerated-aged storage.

### Particle Size Distribution (PSD)

Particle size distribution was measured on Cilas 1064 Laser Diffraction Particle Size Analyzer. Droplets of sample composition were dispersed until getting about 15-20% obscuration. Ultrasound was applied before and during measurement (60 seconds each).

Dᵥ(50) represents on of the percentiles values. This is a statistical parameter that can be read from the cumulative size distribution. Dᵥ(50) (also known as the median) indicates the size below 50% of all particles are found.

Suspension concentrate compositions in accordance with the present invention (composition C, D and E) and comparative compositions (compositions A and B) have been made as per Table 1. All components in Table 1 are in gram / liter.

**Table 1**

| **Component** | | **A** | **B** | **C** | **D** | **E** |
|---|---|---|---|---|---|---|
| (i) | Cyclobutrifluram | 200 | 200 | 200 | 200 | 200 |
| (ii) | Vegetable oil | 0 | 0 | 50 | 100 | 50 |
| (iii) | Fatty alcohol polyglycol ether | 0 | 50 | 50 | 88 | 100 |
| (iv) | Colorant pigment | 60 | 60 | 60 | 60 | 60 |
| (v) | Sodium-dioctyl-sulfosuccinat | 10 | 10 | 10 | 10 | 10 |
| (vi) | Copolymer Butanol PO (propylene oxide)/EO (ethylene oxide) | 30 | 30 | 30 | 30 | 30 |
| (vii) | Lignosulfonic acid, sodium salt | 15 | 15 | 15 | 15 | 15 |
| (viii) | Solution of an acrylic graft copolymer | 20 | 20 | 20 | 20 | 20 |
| Antifreeze | | 50 | 50 | 50 | 50 | 50 |
| Antifoam | | 2.3 | 2.3 | 5.3 | 10.3 | 5.3 |
| Preservative | | 2.7 | 2.7 | 2.7 | 2.7 | 2.7 |
| Thickener | | 11.8 | 11.8 | 11.8 | 11.8 | 11.8 |
| Water | | rest | rest | rest | rest | rest |
| **TOTAL** | | 1 liter | 1 liter | 1 liter | 1 liter | 1 liter |

**Table 2: Dust-off test results of compositions in Table 1. All test results in Table 2 are in g dust/100kg seeds.**

| **Crop** | **Untreated Seeds** | **A** | **B** | **C** | **D** | **E** |
|---|---|---|---|---|---|---|
| Wheat | 1.16 | 1.14 | 0.42 | 0.15 | 0.08 | 0.15 |
| Rice | 11.9 | | | 1.15 | 0.40 | 0.35 |
| Peanut | 0.46 | | | 0.37 | 0.32 | 0.51 |

### Conclusions:

Compositions of the present invention comprising (i) cyclobutrifluram; (ii) 50 to 105 gram / liter of a vegetable oil; and (iii) 50 to 100 gram / liter of an ethoxylated fatty alcohol, e.g. compositions "C", "D", and "E", have been shown to have surprisingly much reduced dust-off properties, especially on treated wheat seed, compared with comparative compositions A and B.

Furthermore, composition D shows surprisingly significantly better dust-off property than compositions C and E. In particular, composition D's dust-off property is surprisingly about twice as good as that of compositions C and E for wheat seeds. Composition D's dust-off property is also better than that of compositions C and E for peanut seeds.

Comparative composition "A" does not contain either vegetable oil nor fatty alcohol polyglycol ether, and results in much higher dust-off potential, i.e. significantly more SC formulation on the seed surface is lost.

Comparative composition "B" just contains one of the additives, namely fatty alcohol polyglycol ether, also results in significantly higher dust-off potential compared to compositions of the present invention.

**Table 3: Seed-flow test results of compositions in Table 1.**

| **Crop** | **Untreated Seeds** | **A** | **B** | **C** | **D** | **E** |
|---|---|---|---|---|---|---|
| Wheat | 100% | 67.9% | 68.2% | 72.8% | 76% | 74.4% |
| Barley | 100% | 62.6% | 58.7% | 63.7% | 63% | 62.7% |
| Rice | 100% | | | 82.4% | 84.6% | 80.7% |

### Conclusions:

Compositions of the present invention, e.g. compositions C, D and E, also demonstrate a surprisingly improved effect on seed flow of the treated seeds compared with comparative compositions A and B.

Furthermore, surprisingly composition "D" has the best seed flow properties for wheat and rice among all compositions tested.

**Table 4: Viscosity test results of some compositions in Table 1. All test results in Table 4 are in mPa.s**

| **Storage time** | **Storage Temperature** | **C** | **D** | **E** |
|---|---|---|---|---|
| 0 | 20°C | 560 | 620 | 562 |
| 1 month | -18°C | 936 | 728 | 768 |
| 2 month | -18°C | 1400 | 936 | 1400 |
| 2 month | 0°C | 668 | 600 | 658 |
| 2 month | 20°C | 912 | 788 | 852 |

### Conclusions:

Viscosity for composition D is surprisingly much more stable than compositions C and E, especially at more extreme temperature conditions such as -18 °C and 20 °C after two months. This means much less thickening and thus improved physical stability for D after two months of storage.

**Tabel 5: Particle size (d50) results of some compositions in Table 1. All test results in Table 5 are in micrometer.**

| **Storage time** | **Storage Temperature** | **C** | **D** | **E** |
|---|---|---|---|---|
| 0 | 20°C | 2.33 | 2.49 | 2.64 |
| 0.5 month | 54°C | 4.55 | 3.43 | 4.62 |
| 2 month | -10°C/+50°C cycling | 3.38 | 3.19 | 6.03 |
| 3 month | 20°C | 2.36 | 2.47 | 2.63 |

### Conclusions

Particle size growth of composition D is surprisingly significantly less than that of C and E after storage for 0.5 month, 2 months and 3 months, respectively. This means less crystal growth and thus better physical stability for D over time compared with C and E.

Notably, unlikely compositions C and E, composition D contains more vegetable oil than ethoxylated fatty alcohol. It is believed that this has contributed to the surprisingly better seed treatment properties and physical stability properties of composition D compared with compositions C and E.

## Claims

1. An aqueous suspension concentrate composition comprising
(i) cyclobutrifluram;
(ii) 25 to 125 gram / liter of a vegetable oil; and
(iii) 25 to 125 gram / liter of an oleyl alcohol polyglycol ether.

2. The aqueous suspension concentrate composition according to claim 1, wherein the aqueous suspension concentrate composition comprises 100 to 300 gram / liter of cyclobutrifluram.

3. The aqueous suspension concentrate composition according to claim 1 or 2, wherein the aqueous suspension concentrate composition comprises more vegetable oil than oleyl alcohol polyglycol ether alcohol as measured in grams / liter.

4. An aqueous suspension concentrate composition according to one of claims 1 to 3, wherein the aqueous suspension concentrate composition comprises
(ii) 75 to 125 gram / liter of a vegetable oil; and
(iii) 60 to 110 gram / liter of an oleyl alcohol polyglycol ether.

5. The aqueous suspension concentrate composition according to one of claims 1 to 4, wherein the vegetable oil is soybean oil.

6. The aqueous suspension concentrate composition according to one of claims 1 to 5, further comprising
(iv) 20 to 120 gram / liter of a pigment.

7. The aqueous suspension concentrate composition according to one of claims 1 to 6, comprising
(i) 150 to 250 gram / liter cyclobutrifluram;
(ii) 25 to 125 gram / liter of a vegetable oil;
(iii)25 to 125 gram / liter of an oleyl alcohol polyglycol ether; and
(iv) 40 to 100 gram / liter of a pigment.

8. The aqueous suspension concentrate composition according to one of claims 1 to 7, comprising
(i) 150 to 250 gram / liter cyclobutrifluram;
(ii) 75 to 125 gram / liter of soybean oil;
(iii) 60 to 110 gram / liter of an oleyl alcohol polyglycol ether; and
(iv) 40 to 100 gram / liter of a pigment.

9. The aqueous suspension concentrate composition according to one of claims 1 to 8, further comprising
(v) 1 to 30 gram / liter of a sulfosuccinate wetting agent;
(vi) 5 to 50 gram / liter of a butyl polyalkylene oxide block copolymer; and
(vii) 2.5 to 35 gram / liter of a sodium lignosulfonate.

10. The aqueous suspension concentrate composition according to any one of claims 1 to 9, further comprising
(viii) 1 to 55 gram / liter of an acrylic graft copolymer.

11. A method of reducing or preventing nematicidal or fungicidal damage in a plant comprising applying a composition according to any one of claims 1 to 10 to the seed of a plant.

12. The method according to claim 11, wherein the plant is selected from barley, brassica head and stem vegetables, bean, carrot, chickpea, corn, cotton, cowpea, curcurbits, dry beans, field peas, garden beans, garlic, lentils, lettuce, millet, oat, onion, peanut, peas, potato, rice, rye, sorghum, soybean, sugarbeet, sunflower, triticale, canola, oil seed rape seed, sweet corn, and wheat.

13. The method according to claim 12, wherein the plant is selected from barley, wheat, peanut and rice.

14. The method according to any one of claims 11 to 13, wherein the composition according to any one of claims 1 to 10 comprises a further pesticidally active ingredient.

## Patentansprüche

1. Wässrige Suspensionskonzentratzusammensetzung, umfassend
(i) Cyclobutrifluram,
(ii) 25 bis 125 Gramm / Liter eines Pflanzenöls und
(iii) 25 bis 125 Gramm / Liter eines Oleylalkoholpolyglykolethers.

2. Wässrige Suspensionskonzentratzusammensetzung nach Anspruch 1, wobei die wässrige Suspensionskonzentratzusammensetzung 100 bis 300 Gramm / Liter Cyclobutrifluram umfasst.

3. Wässrige Suspensionskonzentratzusammensetzung nach Anspruch 1 oder 2, wobei die wässrige Suspensionskonzentratzusammensetzung mehr Pflanzenöl als Oleylalkoholpolyglykolether, gemessen in Gramm / Liter, umfasst.

4. Wässrige Suspensionskonzentratzusammensetzung nach einem der Ansprüche 1 bis 3, wobei die wässrige Suspensionskonzentratzusammensetzung Folgendes umfasst:
(ii) 75 bis 125 Gramm / Liter eines Pflanzenöls und
(iii) 60 bis 110 Gramm / Liter eines Oleylalkoholpolyglykolethers.

5. Wässrige Suspensionskonzentratzusammensetzung nach einem der Ansprüche 1 bis 4, wobei es sich bei dem Pflanzenöl um Sojaöl handelt.

6. Wässrige Suspensionskonzentratzusammensetzung nach einem der Ansprüche 1 bis 5, weiterhin umfassend
(iv) 20 bis 120 Gramm / Liter eines Pigments.

7. Wässrige Suspensionskonzentratzusammensetzung nach einem der Ansprüche 1 bis 6, umfassend
(i) 150 bis 250 Gramm / Liter Cyclobutrifluram,
(ii) 25 bis 125 Gramm / Liter eines Pflanzenöls,
(iii) 25 bis 125 Gramm / Liter eines Oleylalkoholpolyglykolethers und
(iv) 40 bis 100 Gramm / Liter eines Pigments.

8. Wässrige Suspensionskonzentratzusammensetzung nach einem der Ansprüche 1 bis 7, umfassend
(i) 150 bis 250 Gramm / Liter Cyclobutrifluram,
(ii) 75 bis 125 Gramm / Liter Sojaöl,
(iii) 60 bis 110 Gramm / Liter eines Oleylalkoholpolyglykolethers und
(iv) 40 bis 100 Gramm / Liter eines Pigments.

9. Wässrige Suspensionskonzentratzusammensetzung nach einem der Ansprüche 1 bis 8, weiterhin umfassend
(v) 1 bis 30 Gramm / Liter eines Sulfosuccinat-Netzmittels,
(vi) 5 bis 50 Gramm / Liter eines Butylpolyalkylenoxid-Blockcopolymers und
(vii) 2,5 bis 35 Gramm / Liter eines Natriumlignosulfonats.

10. Wässrige Suspensionskonzentratzusammensetzung nach einem der Ansprüche 1 bis 9, weiterhin umfassend
(viii) 1 bis 55 Gramm / Liter eines Acryl-Pfropfcopolymers.

11. Verfahren zum Reduzieren oder Verhindern nematizider oder fungizider Schäden in einer Pflanze, umfassend das Aufbringen einer Zusammensetzung nach einem der Ansprüche 1 bis 10 auf das Saatgut einer Pflanze.

12. Verfahren nach Anspruch 11, wobei die Pflanze aus Gerste, Brassica-Kopf- und Stängelgemüse, Bohne, Karotte, Kichererbse, Mais, Baumwolle, Augenbohne, Kürbisgewächsen, Trockenbohnen, Ackererbsen, Gartenbohnen, Knoblauch, Linsen, Salat, Hirse, Hafer, Zwiebel, Erdnuss, Erbsen, Kartoffel, Reis, Roggen, Sorghum, Sojabohne, Zuckerrübe, Sonnenblume, Triticale, Canola, Raps, Zuckermais und Weizen ausgewählt ist.

13. Verfahren nach Anspruch 12, wobei die Pflanze aus Gerste, Weizen, Erdnuss und Reis ausgewählt ist.

14. Verfahren nach einem der Ansprüche 11 bis 13, wobei die Zusammensetzung nach einem der Ansprüche 1 bis 10 einen weiteren pestiziden Wirkstoff umfasst.

## Revendications

1. Composition de concentré de suspension aqueuse, comprenant
(i) du cyclobutrifluram ;
(ii) 25 à 125 grammes/litre d'une huile végétale ; et
(iii) 25 à 125 grammes/litre d'un éther de polyglycol d'alcool oléylique.

2. Composition de concentré de suspension aqueuse selon la revendication 1, la composition de concentré de suspension aqueuse comprenant 100 à 300 grammes/litre de cyclobutrifluram.

3. Composition de concentré de suspension aqueuse selon la revendication 1 ou 2, dans laquelle la composition de concentré de suspension aqueuse comprend plus d'huile végétale que d'éther de polyglycol d'alcool oléylique comme mesuré en grammes/litre.

4. Composition de concentré de suspension aqueuse selon l'une des revendications 1 à 3, la composition de concentré de suspension aqueuse comprenant
(ii) 75 à 125 grammes/litre d'une huile végétale ; et
(iii) 60 à 110 grammes/litre d'un éther de polyglycol d'alcool oléylique.

5. Composition de concentré de suspension aqueuse selon l'une des revendications 1 à 4, l'huile végétale étant une huile de soja.

6. Composition de concentré de suspension aqueuse selon l'une des revendications 1 à 5, comprenant en outre
(iv) 20 à 120 grammes/litre d'un pigment.

7. Composition de concentré de suspension aqueuse selon l'une des revendications 1 à 6, comprenant
(i) 150 à 250 grammes/litre de cyclobutrifluram ;
(ii) 25 à 125 grammes/litre d'une huile végétale ;
(iii) 25 à 125 grammes/litre d'un éther de polyglycol d'alcool oléylique ; et
(iv) 40 à 100 grammes/litre d'un pigment.

8. Composition de concentré de suspension aqueuse selon l'une des revendications 1 à 7, comprenant
(i) 150 à 250 grammes/litre de cyclobutrifluram ;
(ii) 75 à 125 grammes/litre d'huile de soja ;
(iii) 60 à 110 grammes/litre d'un éther de polyglycol d'alcool oléylique ; et
(iv) 40 à 100 grammes/litre d'un pigment.

9. Composition de concentré de suspension aqueuse selon l'une des revendications 1 à 8, comprenant en outre
(v) 1 à 30 grammes/litre d'un agent mouillant de type sulfosuccinate ;
(vi) 5 à 50 grammes/litre d'un copolymère à blocs de butyle poly(oxyde d'alkylène) ; et
(vii) 2,5 à 35 grammes/litre d'un lignosulfonate de sodium.

10. Composition de concentré de suspension aqueuse selon l'une quelconque des revendications 1 à 9, comprenant en outre
(viii) 1 à 55 grammes/litre d'un copolymère greffé acrylique.

11. Procédé de réduction ou de prévention des dommages nématicides ou fongicides dans un végétal, comprenant l'application d'une composition selon l'une quelconque des revendications 1 à 10 sur la graine d'un végétal.

12. Procédé selon la revendication 11, dans lequel le végétal est choisi parmi l'orge, les légumes à tête et à tige du genre Brassica, les haricots, la carotte, le pois chiche, le maïs, le coton, le niébé, les cucurbitacées, les haricots secs, les pois des champs, les haricots verts, l'ail, les lentilles, la laitue, le millet, l'avoine, l'oignon, l'arachide, les pois, la pomme de terre, le riz, le seigle, le sorgho, le soja, la betterave à sucre, le tournesol, le triticale, le canola, une graine de colza, le maïs doux et le blé.

13. Procédé selon la revendication 12, dans lequel le végétal est choisi parmi l'orge, le blé, l'arachide et le riz.

14. Procédé selon l'une quelconque des revendications 11 à 13, dans lequel la composition selon l'une quelconque des revendications 1 à 10 comprend un autre ingrédient actif sur le plan pesticide.
